# EUROPÄISCHE PATENTSCHRIFT

(11) **EP 2 468 449 B1**
(45) Veröffentlichungstag und Bekanntmachung des Hinweises auf die Patenterteilung: **28.01.2015**
(21) Anmeldenummer: 10196283.5
(22) Anmeldetag: 21.12.2010
(51) Int. Cl.: B23Q 11/08, F16P 1/02, B23K 26/03, B23K 26/38, B23K 26/14, B23K 26/30

(54) **Vorrichtung und Verfahren zur Abschirmung eines Laserstrahls an einer Laserbearbeitungsmaschine zum Bearbeiten von Werkstücken mit Mittels zur Erfassung der Ausrichtung der Stirnfläche des Abschirmungsorgans**
Device for and method of shielding a laser beam of a laser processing machine for processing workpieces with means for estimating the orientation of the laying surface of the shielding organ
Dispositif et procédé destinés à la protection contre un rayon laser sur une machine de traitement par laser destinée à traiter des pièces avec des moyens pour estimer l'orientation de la surface d'appui de l'organe de protection

(43) Veröffentlichungstag der Anmeldung: 27.06.2012
(73) Patentinhaber: TRUMPF Werkzeugmaschinen GmbH + Co. KG, 71254 Ditzingen (DE)
(72) Erfinder: Tränklein, Dennis, 71155 Altdorf (DE)
(74) Vertreter: Kohler Schmid Möbus

(56) Entgegenhaltungen:
- DE-U1- 29 620 304
- DE-U1-202009 013 899
- GB-A- 1 353 859
- US-A- 5 848 859
- US-A- 5 948 292

## Beschreibung

Die Erfindung betrifft eine Abschirmungsvorrichtung zu Abschirmung eines an einer Laserbearbeitungsmaschine zum Bearbeiten von Werkstücken gemäß dem Oberbegriff des Anspruchs 1.

Die Erfindung betrifft außerdem ein Verfahren zum Abschirmen eines an einer Laserbearbeitungsmaschine zum Bearbeiten von Werkstücken gemäß dem Oberbegriff des Anspruchs 12.

Schließlich betrifft die Erfindung eine Laserbearbeitungsmaschine mit einer Abschirmungsvorrichtung der eingangs genannten Art (siehe Anspruch 9) sowie ein Verfahren zum Bearbeiten von Werkstücken, insbesondere von Blechen, im Rahmen dessen ein Abschirmungsverfahren der vorstehenden Art durchgeführt wird (siehe Anspruch 14).

Gattungsgemäßer Stand der Technik (Basis für die Oberbegriffe den Ansprüche 1 und 12) ist offenbart in DE 296 20 304 U1. Im Falle des Standes der Technik ist an dem Bearbeitungskopf einer Werkzeugmaschine zur Bearbeitung von Werkstücken mittels eines Laser- oder eines Wasserstrahls eine Abschirmungsvorrichtung mit einem Abschirmungsorgan in Form einer Schutzbürste vorgesehen. Die Schutzbürste weist mehrere Borstenreihen auf, die konzentrisch mit dem abzuschirmenden Laser- oder Wasserstrahl um diesen herum verlaufen. Mit ihren werkstückseitigen Enden bilden die Borsten der Schutzbürste eine ringförmige Stirnfläche aus. Während der Werkstückbearbeitung setzt die Schutzbürste mit ihrer Stirnfläche auf der Oberseite des zu bearbeitenden Werkstückes auf. Dabei wird die Schutzbürste mittels vorgespannter Federn an die Werkstückoberfläche angepresst. Aufgrund ihrer federnden Abstützung kann die Schutzbürste mit ihrer Stirnfläche wechselnden Oberflächenkonturen der zu bearbeitenden Werkstücke folgen.

Weiterer Stand der Technik ist offenbart in US 5,948,292 A, US 5,848,859 A und GB 1 353 859 A.

US 5,948,292 A offenbart eine Laserschneidmaschine zum Schneiden außerordentlich dünner Werkstücke mit Schneidgasunterstützung. Aufgrund der geringen Dicke der zu bearbeitenden Werkstücke kommt der Einstellung der Fokuslage des für die schneidende Werkstückbearbeitung eingesetzten Laserbearbeitungsstrahls eine besondere Bedeutung zu. Es muss vermieden werden, dass sich die Lage des Laserstrahlfokus während der bei der Werkstückbearbeitung von Werkstück und Laserstrahl ausgeführten Relativbewegung und/oder unter dem Einfluss des auf die Bearbeitungsstelle aufgegebenen Schneidgases in Querrichtung des Werkstückes ändert. Zur Gewährleistung einer konstanten Fokuslage ist eine Vorrichtung zur Fokuslageneinstellung mit einem Niederhalter vorgesehen, der ein zu bearbeitendes Werkstück mit seiner Stirnfläche an der Oberseite beaufschlagt und gegen eine an der Unterseite des Werkstücks angeordnete Platte presst. Der Niederhalter ist ringartig ausgebildet und konzentrisch mit der Strahlachse eines Laserstrahls angeordnet, der seinerseits von einem Laserschneidkopf auf das Werkstück gerichtet wird. Vor Beginn der schneidenden Werkstückbearbeitung wird die Fokuslage des Laserbearbeitungsstrahls durch entsprechende Positionierung des Laserschneidkopfes längs der Strahlachse des Laserstrahls in Querrichtung des Werkstücks eingestellt. Während der Werkstückbearbeitung liegt der Niederhalter mit seiner Stirnfläche permanent an der Oberseite des Werkstückes an. Ändert sich die Lage des Werkstückes in Richtung der Strahlachse des Laserstrahls, so ändert sich auch die Höhenlage des Niederhalters. Derartige Lageänderungen des Niederhalters werden gegebenenfalls erfasst und bewirken eine Nachjustage des Laserschneidkopfes längs der Strahlachse des Laserstrahls, um auf diese Art und Weise eine während des gesamten Schneidprozesses unveränderte Fokuslage in Querrichtung des Werkstücks sicherzustellen.

US 5,848,859 A offenbart eine Bohrvorrichtung mit einem Bohrkopf, der an einem Roboterarm angebracht ist. Werkstückseitig weist der Bohrkopf eine Basis auf, die allseitig schwenkbar an einem Ansatz eines Zwischengehäuses gelagert ist. Mit einer Kontaktfläche wird die Basis an eine gekrümmte Werkstückfläche angelegt. Aufgrund ihrer Schwenkbeweglichkeit richtet sich die Basis dabei mit der Kontaktfläche tangential zu der Werkstückfläche aus. Eine Längsachse der Basis verläuft senkrecht zu der Werkstückfläche. Ein um eine Bohrachse rotierendes Bohrwerkzeug wird mittels des Roboterarms derart ausgerichtet, dass die Bohrachse mit der Längsachse der Basis zusammenfällt. Zur bohrenden Werkstückbearbeitung wird das Bohrwerkzeug längs der Bohrachse gegen das Werkstück bewegt. Die Kontaktfläche an der Basis des vorbekannten Bohrkopfes ist nach dem Anlegen der Basis an die Werkstückfläche mit ihrer tangentialen Sollausrichtung gegenüber der Werkstückfläche angeordnet.

GB 1 353 859 A beschreibt eine Schutzhaube zur Abschirmung der Bearbeitungsstelle eines Fräswerkzeuges an einem Werkstück. Eine Wand der Schutzhaube ist als Faltenbalg ausgebildet und überbrückt den Zwischenraum zwischen einem Maschinengestell der mit dem Fräswerkzeug ausgerüsteten Fräsmaschine einerseits und dem auf einem Tisch fixierten Werkstück andererseits. An ihrem von dem Maschinengestell abliegenden Ende ist die Wand der Schutzhaube mit einer Zwischenplatte sowie mit einer an der der Zwischenplatte werkstückseitig angeordneten und von der Zwischenplatte beabstandeten Frontplatte versehen. An der Zwischenplatte greift ein motorisch angetriebener Scherenmechanismus an, mittels dessen die Wand der Schutzhaube automatisiert ausgefahren und gestaucht werden kann. Zur Abschirmung der Bearbeitungsstelle des Fräswerkzeuges an dem Werkstück wird die Wand der Schutzhaube mittels des Scherenmechanismus so weit ausgefahren, bis die Frontplatte an dem Werkstück zur Anlage kommt. Ist die Frontplatte mit dem Werkstück in Kontakt gekommen, so führt eine fortgesetzte Ausfahrbewegung der Wand dazu, dass sich die Zwischenplatte der Frontplatte annähert und dass sich folglich der zwischen der Frontplatte und der Zwischenplatte bestehende Abstand verkleinert. Infolgedessen werden in dem Zwischenraum zwischen der Frontplatte und der Zwischenplatte angeordnete Steuerventile betätigt. Aufgrund der Betätigung der Steuerventile wird der motorische Antrieb des Scherenmechanismus stillgesetzt. Verringert sich bei ausgefahrener Wand der Abstand zwischen dem Werkstück und dem Maschinengestell, so nähert sich die an dem Werkstück anliegende Frontplatte ihrerseits der Zwischenplatte an. Die zwischen der Zwischenplatte und der Frontplatte angeordneten Steuerventile werden auch in diesem Fall betätigt und bewirken eine mittels des Scherenmechanismus ausgeführte Rückzugsbewegung der Zwischenplatte und der damit verbundenen Frontplatte, bis der Sollabstand zwischen der Frontplatte und der Zwischenplatte wiederhergestellt ist. Die Frontplatte befindet sich bei Gebrauchslage der Wand der Schutzhaube permanent im Kontakt mit der zugeordneten Werkstückfläche und ist folglich permanent werkstückflächenparallel ausgerichtet.

Die Aufgabe der vorliegenden Erfindung besteht darin, die Funktionssicherheit der Abschirmung eines Laserstrahls und/oder der Abschirmung der Auftreffstelle des Laserstrahls an einem Werkstück zu verbessern.

Erfindungsgemäß gelöst wird diese Aufgabe durch die Abschirmungsvorrichtung und das Abschirmungsverfahren nach den Patentansprüchen 1 und 12 sowie durch die Laserbearbeitungsmaschine und das Bearbeitungsverfahren nach den Patentansprüchen 9 und 14.

Im Falle der Erfindung wird mittels einer eigens hierfür vorgesehenen Erfassungseinrichtung eine Abweichung der Ausrichtung der Stirnfläche des in der Gebrauchslage befindlichen Abschirmungsorgans von der Sollausrichtung gegenüber der dem Abschirmungsorgan gegenüberliegenden Werkstückfläche bestimmt. Das Abschirmungsorgan umgibt den Laserstrahl oder dessen Auftreff- bzw. Bearbeitungsstelle an dem Werkstück wenigstens teilweise. Bei Sollausrichtung verläuft die Stirnfläche des Abschirmungsorgans parallel zu der ihr zugeordneten Werkstückfläche. Bei dieser Ausrichtung der Stirnfläche des Abschirmungsorgans ist eine optimale Abschirmung des Laserstrahls oder der Auftreffstelle des Laserstrahls an dem betreffenden Werkstück gewährleistet. Ein von dem Sollverlauf abweichender Verlauf der Stirnfläche des Abschirmungsorgans kann unterschiedliche Ursachen haben. Denkbar sind beispielsweise eine Fehljustage des Abschirmungsorgans aber auch eine Fehlausrichtung des Abschirmungsorgans in Folge einer Kollision der Abschirmungseinheit mit einem zu bearbeitenden Werkstück oder mit einer Maschinenkomponente in ihrer Umgebung. Wird eine von der Sollausrichtung abweichende Ausrichtung der Stirnfläche des Abschirmungsorgans gemäß der Erfindung festgestellt, so kann erfindungsgemäß auf unterschiedliche Art und Weise reagiert werden. Insbesondere besteht die Möglichkeit, dass die Laserstrahlquelle vorzugsweise automatisch stillgesetzt wird. Im Anschluss daran können die erforderlichen Maßnahmen getroffen werden, um die Ausrichtung der Stirnfläche des Abschirmungsorgans zu korrigieren.

Besondere Ausführungsarten der Vorrichtungen und Verfahren nach den unabhängigen Patentansprüchen ergeben sich aus den abhängigen Patentansprüchen 2 bis 8, 10, 11, 13 und 15.

In bevorzugter Ausgestaltung der Erfindung wird die Abweichung der Ausrichtung der Stirnfläche des in der Gebrauchslage befindlichen Abschirmungsorgans von der Sollausrichtung nicht unmittelbar an der Stirnfläche sondern vielmehr mit räumlichem Abstand davon erfasst. Zu diesem Zweck sind ein Widerlager für das Abschirmungsorgan sowie ein gegenüber der Stirnfläche des Abschirmungsorgans definiert ausgerichtetes abschirmungsseitiges Referenzelement vorgesehen. Die gegenseitige Lage des Widerlagers für das Abschirmungsorgan und des abschirmungsseitigen Referenzelementes gibt die gegenseitige Lage der Stirnfläche des Abschirmungsorgans und der zugeordneten Werkstückfläche wieder (Patentanspruch 2).

Im Interesse eines den tatsächlichen Verhältnissen entsprechenden Erfassungsergebnisses ist im Falle einer weiteren bevorzugten Ausführungsform der Erfindung vorgesehen, dass zur Erfassung der gegenseitigen Ausrichtung des Widerlagers für das Abschirmungsorgan und des abschirmungsseitigen Referenzelementes eine kalibrierbare Erfassungseinrichtung vorgesehen ist (Patentanspruch 3). Eine Kalibrierung der Erfassungseinrichtung kann zeitnah, im Idealfall unmittelbar vor Beginn der Werkstückbearbeitung erfolgen.

Um auf die Feststellung einer Fehljustierung der Stirnfläche des in der Gebrauchslage befindlichen Abschirmungsorgans gegenüber der zugeordneten Werkstückfläche in zweckmäßiger Weise reagieren zu können, weist eine weitere Ausführungsform der erfindungsgemäßen Abschirmungsvorrichtung eine Stelleinrichtung auf, mittels derer die Stirnfläche des Abschirmungsorgans erforderlichenfalls in ihrer Querrichtung zustellbar und dadurch mit der Sollausrichtung anordenbar ist (Patentanspruch 4).

Erfolgt die Erfassung der gegenseitigen Ausrichtung der Stirnfläche des in der Gebrauchslage befindlichen Abschirmungsorgans und der zugeordneten Werkstückfläche mittels eines Widerlagers für das Abschirmungsorgan und eines abschirmungsseitigen Referenzelementes, so ist die Stelleinrichtung zum Anordnen der Stirnfläche des Abschirmungsorgans mit der Sollausrichtung zweckmäßigerweise zwischen dem Widerlager für das Abschirmungsorgan und dem abschirmungsseitigen Referenzelement vorgesehen (Patentanspruch 5).

Als Erfassungseinrichtung zur Erfassung der Abweichung der Ausrichtung der Stirnfläche des in der Gebrauchslage befindlichen Abschirmungsorgans gegenüber der Werkstückfläche kommen Erfassungseinrichtungen unterschiedlicher Bauart in Frage. Erfindungsgemäß bevorzugt wird eine taktile Erfassungseinrichtung, die eine Tasteinrichtung sowie eine Auswerteeinrichtung aufweist. Mittels der Tasteinrichtung wird der Verlauf der Werkstückfläche aufgenommen, indem die Tasteinrichtung in Querrichtung der Werkstückfläche oder in Querrichtung einer die Werkstückfläche repräsentierenden Fläche bewegt und in einer Taststellung an der Werkstückfläche oder an der die Werkstückfläche repräsentierenden Fläche angelegt wird. Mittels der Auswerteeinrichtung wird der auf diese Art und Weise aufgenommene Verlauf der Werkstückfläche mit dem Verlauf der Stirnfläche des in der Gebrauchslage befindlichen Abschirmungsorgans verglichen (Patentansprüche 6, 13).

In bevorzugter Ausgestaltung der Erfindung wird als Tasteinrichtung der taktilen Erfassungseinrichtung das Abschirmungsorgan selbst genutzt (Patentanspruch 7). Mit seiner Stirnfläche wird das Abschirmungsorgan an der Werkstückfläche oder an der die Werkstückfläche repräsentierenden Fläche angelegt.

Eine konstruktiv einfach aufgebaute und dennoch funktionssichere Auswerteeinrichtung für die taktile Erfassungeinrichtung ist in Patentanspruch 8 beschrieben. Die anspruchsgemäße Auswerteeinrichtung umfasst im Einzelnen eine Anzeigeeinrichtung mit wenigstens zwei Anzeigeelementen, ein Bezugselement, eine Wegmesseinrichtung sowie eine Vergleichseinrichtung. Die wenigstens zwei Anzeigeelemente der taktilen Erfassungseinrichtung sind mit deren Tasteinrichtung verbunden. Ist die Tasteinrichtung von der Werkstückfläche oder von der die Werkstückfläche repräsentierenden Fläche beabstandet, so nehmen die Anzeigeelemente eine Grundstellung ein. In der Grundstellung zeigen die Anzeigeelemente den Verlauf der Stirnfläche des in der Gebrauchslage befindlichen Abschirmungsorgans an. In einer Endstellung geben die Anzeigeelemente der Anzeigeeinrichtung den Verlauf der Werkstückfläche wieder. Die Beträge der Bewegungen, welche die Anzeigeelemente zwischen ihrer Grundstellung und ihrer Endstellung ausführen, werden mittels der Wegmesseinrichtung bestimmt. Die für die einzelnen Anzeigeelemente bestimmten Bewegungsbeträge werden mit Hilfe der Vergleichseinrichtung miteinander verglichen. Als Ergebnis des durchgeführten Vergleichs ergibt sich der gegenseitige Verlauf der Stirnfläche des in der Gebrauchslage befindlichen Abschirmungsorgans und der zugeordneten Werkstückfläche.

An erfindungsgemäßen Laserbearbeitungsmaschinen ist die nach der Erfindung ausgebildete Erfassungseinrichtung zur Erfassung einer Abweichung der Ausrichtung der Stirnfläche des in der Gebrauchslage befindlichen Abschirmungsorgans von der Sollausrichtung gegenüber der Werkstückfläche in die Maschinensteuerung integriert (Patentanspruch 10). Die betreffenden Funktionseinheiten der Laserbearbeitungsmaschine können dann in Abhängigkeit von der erfassten gegenseitigen Ausrichtung der Stirnfläche des in der Gebrauchslage befindlichen Abschirmungsorgans und der zugeordneten Werkstückfläche gesteuert werden. Wie vorstehend bereits ausgeführt, besteht insbesondere die Möglichkeit, bei Feststellung einer Fehlausrichtung der Stirnfläche des Abschirmungsorgans die Laserstrahlquelle der Maschine stillzusetzen. Ist eine steuerbare Stelleinrichtung zur Justage des Abschirmungsorgans gegenüber der zugeordneten Werkstückfläche vorgesehen, so kann bei Feststellung einer Fehlausrichtung der Stirnfläche des Abschirmungsorgans die Stelleinrichtung im Sinne einer Korrektur der Ausrichtung der Stirnfläche des Abschirmungsorgans angesteuert werden.

Gemäß Patentanspruch 11 wird eine als taktile Erfassungseinrichtung ausgebildete Einrichtung zur Erfassung einer Abweichung der Ausrichtung der Stirnfläche des in der Gebrauchslage befindlichen Abschirmungsorgans von der Sollausrichtung gegenüber der Werkstückfläche gleichzeitig zur Werkstückdickenmessung genutzt. Im Rahmen des betreffenden Bearbeitungsverfahrens wird die Dicke von zu bearbeitenden und/oder von bearbeiteten Werkstücken bestimmt, indem die Tasteinrichtung der taktilen Erfassungseinrichtung in einer Taststellung an der Werkstückfläche angelegt und die Taststellung der Tasteinrichtung mit einer Bezugsstellung verglichen wird. Anhand des durchgeführten Vergleichs wird die Werkstückdicke bestimmt (Patentanspruch 15).

Nachstehend wird die Erfindung anhand beispielhafter schematischer Darstellungen näher erläutert. Es zeigen:
- Figur 1: eine Laserbearbeitungsmaschine für die Blechbearbeitung mit einer Abschirmungsvorrichtung für den Laserstrahl,
- Figur 2: die Abschirmungseinheit der Abschirmungsvorrichtung gemäß Figur 1,
- Figur 3: ein stark schematisiert dargestelltes Detail der Abschirmungs einheit gemäß Figur 2,
- Fign. 4a, 4b: stark schematisierte Darstellungen zur Veranschaulichung der Funktionsweise der Abschirmungsvorrichtung gemäß den Figuren 1 bis 3,
- Fign. 5a, 5b; 6a, 6b; 7: stark schematisierte Darstellungen der Abschirmungseinheit gemäß den Figuren 2 bis 4b bei irregulären Betriebszuständen.

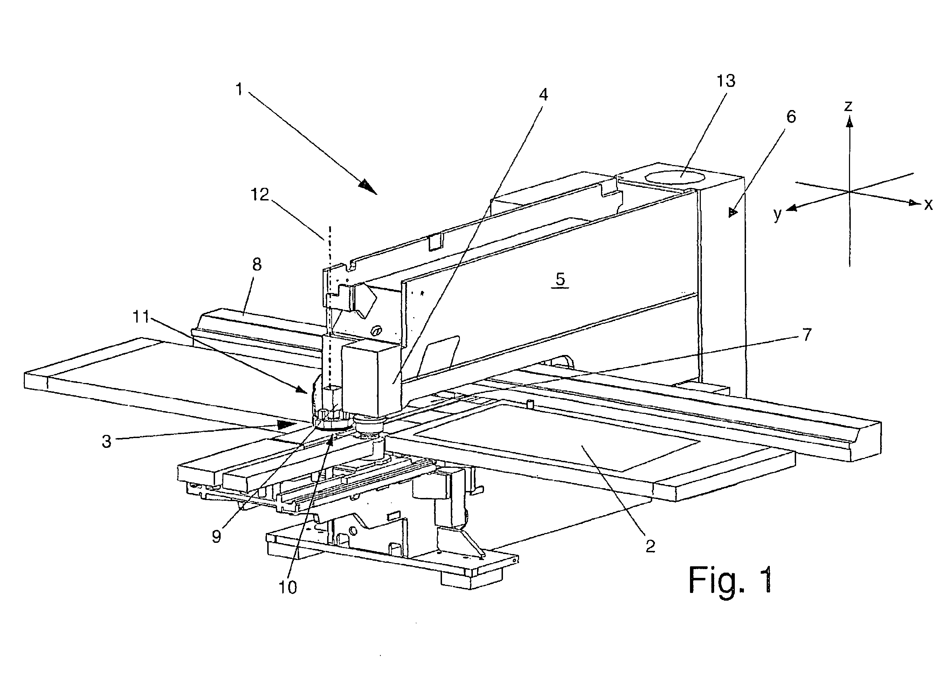

Gemäß Figur 1 ist eine Laserbearbeitungsmaschine 1 zur Bearbeitung von Blechen 2 als sogenannte "Kombimaschine" ausgeführt und als solche mit einer Laserschneidstation 3 sowie mit einer Stanzstation 4 ausgestattet. Die Laserschneidstation 3 und die Stanzstation 4 befinden sich an dem freien Ende eines oberen Gestellschenkels 5 eines C-förmigen Maschinengestells 6. In einem Rachenraum 7 des Maschinengestells 6 ist eine herkömmliche Koordinatenführung 8 untergebracht. Mittels dieser werden in gewohnter Weise Bleche 2 zu Bearbeitungszwecken in einer horizontalen Bewegungsebene relativ zu der Laserschneidstation 3 bzw. der Stanzstation 4 bewegt.

Die Stanzstation 4 ist herkömmlicher Bauart. Die Laserschneidstation 3 umfasst einen Laserschneidkopf 9 sowie eine Abschirmungsvorrichtung 10. Die Abschirmungsvorrichtung 10 dient dazu, einen von dem Laserschneidkopf 9 auf ein zu bearbeitendes Blech 2 gerichteten Laserstrahl sowie dessen Bearbeitungsstelle an dem Blech 2 gegen die Umgebung abzuschirmen. Die Abschirmungsvorrichtung 10 ist von besonderer sicherheitstechnischer Bedeutung. Im Interesse der gebotenen Arbeitssicherheit muss die Laserstrahlung an der Laserschneidstation 3 an einem Austreten in die Umgebung gehindert werden. Diese Notwendigkeit besteht in besonderem Maße in Fällen, in denen die zur Blechbearbeitung genutzte Laserstrahlung von einem Festkörperlaser stammt. Derartige Laserstrahlung ist augengängig und besitzt daher ein besonderes Gefährdungspotential.

Eine Abschirmungseinheit 11 der Abschirmungsvorrichtung 10 ist unabhängig von dem Laserschneidkopf 9 in Richtung einer vertikalen Bewegungsachse 12 zustellbar. Eine entsprechende Bewegungsmöglichkeit besteht für den Laserschneidkopf 9. Ebenso wie die übrigen wesentlichen Funktionen der Laserbearbeitungsmaschine 1 werden auch die Bewegungen des Laserschneidkopfes 9 und der Abschirmungseinheit 11 durch eine numerische Maschinensteuerung 13 gesteuert. Das dreiachsige Koordinatensystem der numerischen Maschinensteuerung 13 ist in Figur 1 mit den Achsen x, y und z angedeutet.

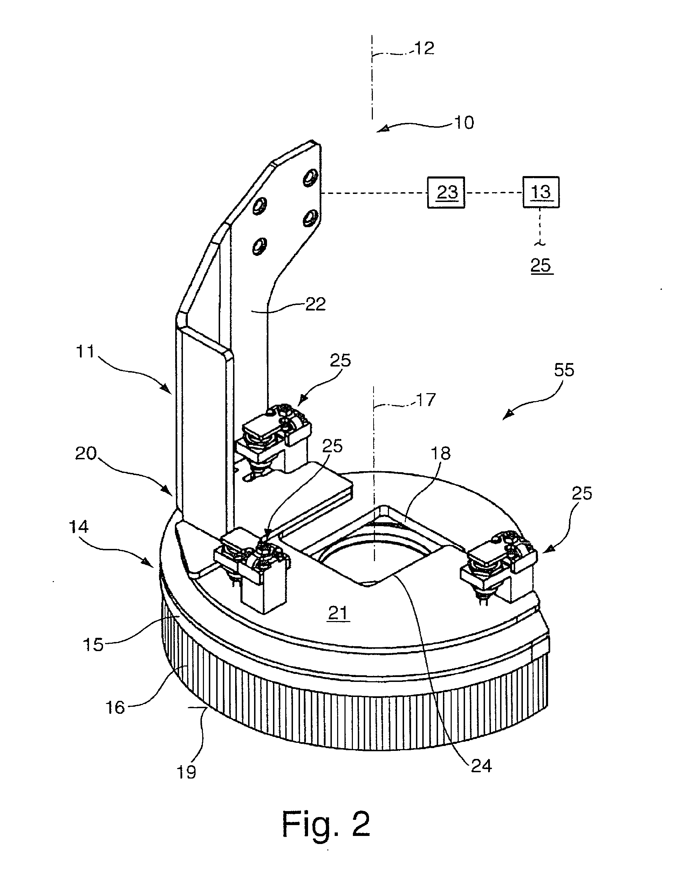

Die Abschirmungseinheit 11 der Abschirmungsvorrichtung 10 ist in Figur 2 im Detail gezeigt.

Gemäß Figur 2 umfasst die Abschirmungseinheit 11 als Abschirmungsorgan eine Abschirmungsbürste 14. Diese weist eine Grundplatte 15 sowie ein daran fixiertes Borstenfeld 16 auf. Das Borstenfeld 16 besitzt die Form eines Kreisringes und besteht aus mehreren kreisförmigen Borstenreihen, die konzentrisch mit einer Achse 17 der Abschirmungseinheit 11 um diese herum angeordnet sind. In der Grundplatte 15 der Abschirmungsbürste 14 ist ein im Wesentlichen rechteckiges Fenster 18 ausgespart, innerhalb dessen bei Einbaulage der Abschirmungseinheit 11 der Laserschneidkopf 9 der Laserschneidstation 3 angeordnet ist. Bei Betrieb der Laserschneidstation 3 fällt die Strahlachse des von dem Laserschneidkopf 9 auf das zu bearbeitende Blech 2 gerichteten Laserstrahls mit der Achse 17 der Abschirmungseinheit 11 zusammen. Die Abschirmungsbürste 14 liegt dem zu bearbeitenden Blech 2 mit einer Stirnfläche 19 gegenüber, die von den werkstückseitigen freien Enden der Borsten des Borstenfeldes 16 gebildet wird und die Form einer ebenen Kreisringfläche besitzt.

Als weitere Komponente umfasst die Abschirmungseinheit 11 eine Trageinheit 20 mit einer Tragplatte 21 und einem daran befestigten Tragwinkel 22. Über den Tragwinkel 22 ist die Abschirmungseinheit 11 an einen in Figur 2 angedeuteten Positionierantrieb 23 der Abschirmungsvorrichtung 10 angebunden. Dieser wird durch die numerische Maschinensteuerung 13 gesteuert und dient dazu, die Abschirmungseinheit 11 in Richtung der vertikalen Bewegungsachse 12 in eine Position zuzustellen, in welcher die Abschirmungsbürste 14 ihre Gebrauchslage einnimmt und den von dem Laserschneidkopf 9 ausgehenden Laserstrahl sowie dessen Bearbeitungsstelle an dem betreffenden Blech 2 wirksam gegen die Umgebung abschirmt.

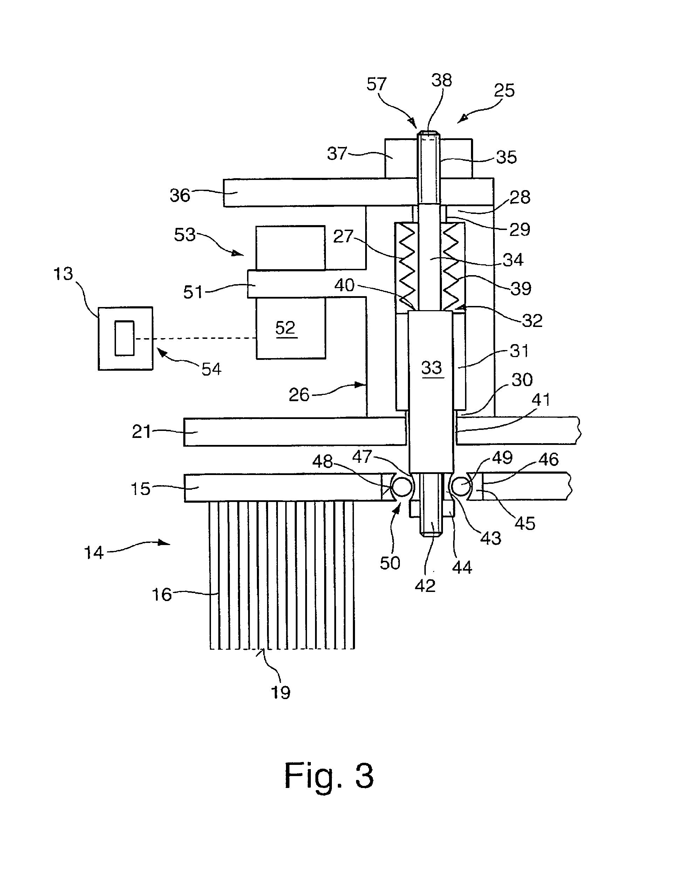

Die Tragplatte 21 der Trageinheit 20 ist mit einem Ausschnitt 24 für den Laserschneidkopf 9 versehen. An der Tragplatte 21 ist die Abschirmungsbürste 14 an der Trageinheit 20 in vertikaler Richtung schwimmend aufgehängt. Zu diesem Zweck sind in dem gezeigten Beispielsfall insgesamt drei Lagerstellen 25 vorgesehen. Eine der Lagerstellen 25 ist in Figur 3 in einem stark schematisierten Schnitt dargestellt. Die Verhältnisse an den beiden übrigen Lagerstellen 25 sind identisch.

Ausweislich Figur 3 ist die Tragplatte 21 an jeder Lagerstelle 25 mit einem Lagergehäuse 26 versehen. Das Lagergehäuse 26 weist in seinem Innern einen Gehäuseraum 27 auf, der nach oben hin durch eine Gehäusedecke 28 mit einem Deckendurchtritt 29 begrenzt wird. Der Deckendurchtritt 29 besitzt einen kleineren Querschnitt als der Gehäuseraum 27.

Nahe der Tragplatte 21 ist an der Wand des Gehäuseraums 27 eine umlaufende Schulter 30 ausgebildet. Diese dient als Auflager für eine Führungsbuchse 31, die ihrerseits einen Lagerbolzen 32 in vertikaler Richtung beweglich führt. Dabei umschließt die Führungsbuchse 31 einen mit einem verhältnismäßig großen Durchmesser versehenen axialen Abschnitt 33 des Lagerbolzens 32. An den axialen Abschnitt 33 großen Durchmessers schließt sich nach oben hin ein durchmesserreduzierter axialer Abschnitt 34 des Lagerbolzens 32 an. An seinem freien Ende ist der durchmesserreduzierte axiale Abschnitt 34 des Lagerbolzens 32 mit einem Außengewinde 35 versehen. Dieses greift in ein Innengewinde an einer Messfahne 36 und außerdem in ein Innengewinde an einer Sicherungsmutter 37 ein, die an der Oberseite der Messfahne 36 angeordnet ist. Stirnseitig ist in das freie Ende des durchmesserreduzierten axialen Abschnittes 34 des Lagerbolzens 32 ein Eingriff 38 für ein Drehbetätigungswerkzeug, beispielsweise für einen Schraubendreher oder einen Innensechskantschlüssel, eingearbeitet.

Im Innern des Gehäuseraums 27 sitzt auf dem durchmesserreduzierten axialen Abschnitt 34 des Lagerbolzens 32 eine Feder 39 auf. Diese stützt sich mit einem axialen Ende an dem Rand des Deckendurchtrittes 29 der Gehäusedecke 28 und mit dem anderen axialen Ende auf einer Stufenfläche 40 ab, die an dem Übergang zwischen dem axialen Abschnitt 33 großen Durchmessers und dem durchmesserreduzierten axialen Abschnitt 34 des Lagerbolzens 32 ausgebildet ist. Zu der Abschirmungsbürste 14 hin durchsetzt der Lagerbolzen 32 mit seinem axialen Abschnitt 33 eine Durchtrittsöffnung 41 der Tragplatte 21. Ein sich an den axialen Abschnitt 33 großen Durchmessers anschließender unterer axialer Endabschnitt 42 des Lagerbolzens 32 ist ebenfalls gegenüber dem axialen Abschnitt 33 durchmesserreduziert und mit einem Außengewinde versehen. Eine Lagerhülse 43 ist auf den unteren axialen Endabschnitt 42 des Lagerbolzens 32 aufgeschraubt und mittels einer Befestigungsmutter 44 zwischen dieser und dem axialen Abschnitt 33 des Lagerbolzens 32 verspannt.

Die Lagerhülse 43 wird von einem konzentrischen Lagerring 45 umschlossen, der seinerseits in eine Lageröffnung 46 an der Grundplatte 15 der Abschirmungsbürste 14 eingesetzt ist. An ihren einander zugewandten Seiten sind die Lagerhülse 43 und der Lagerring 45 mit Hohlkehlen 47, 48 versehen, die um die Achse des Lagerbolzens 32 umlaufen und Lagerkugeln 49 aufnehmen. Gemeinsam bilden die Lagerhülse 43, der Lagerring 45 und die Lagerkugeln 49 ein Gelenklager 50, über welches der Lagerbolzen 32 und die Grundplatte 15 bzw. die Abschirmungsbürste 14 gelenkig aneinander gelagert sind. Die Verbindungsstellen zwischen den Lagerbolzen 32 und der Grundplatte 15 der Abschirmungsbürste 14 liegen in einer Ebene, die parallel zu der Stirnfläche 19 der Abschirmungsbürste 14 verläuft.

Oberhalb der Tragplatte 21 der Trageinheit 20 ragt von dem Lagergehäuse 26 ein Haltearm 51 für einen Wegsensor 52 nach außen vor. Der Wegsensor 52 wirkt mit der Messfahne 36 an dem Lagerbolzen 32 zusammen und bildet gemeinsam mit der Messfahne 36 eine Wegmesseinrichtung 53 eines Wegmesssystems 54, das in die numerische Maschinensteuerung 13 integriert ist.

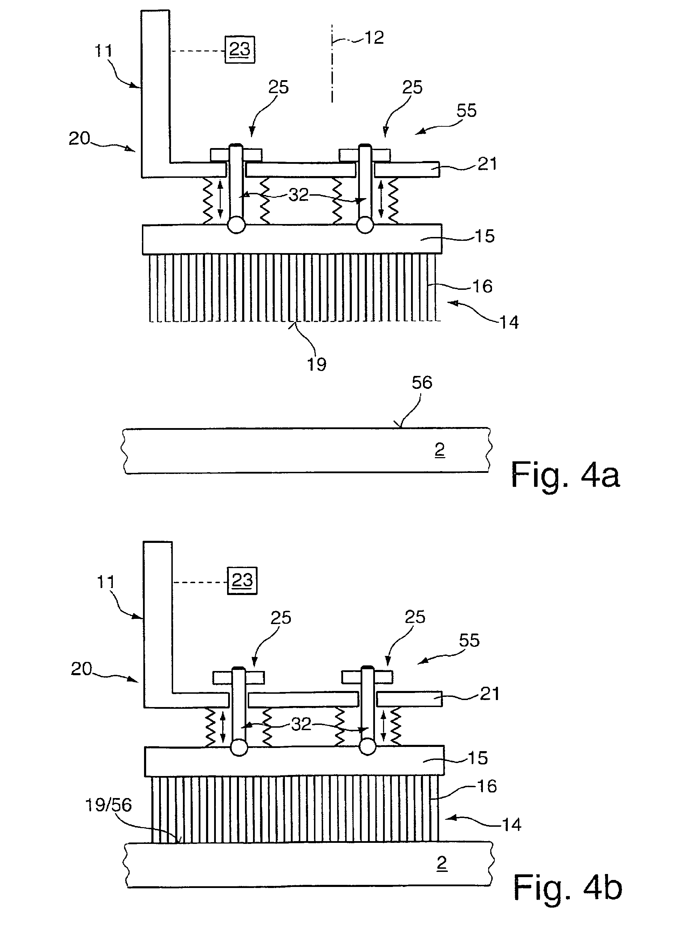

Das Wegmesssystem 54 ist Bestandteil einer taktilen Erfassungseinrichtung 55, mittels derer die Ausrichtung der Stirnfläche 19 der Abschirmungsbürste 14 gegenüber einer Werkstückfläche, nämlich gegenüber einer in den Figuren 4a bis 7 gezeigten Oberfläche 56 eines Bleches 2 erfasst werden kann.

Die Figuren 4a bis 7 sollen lediglich die grundsätzliche Funktionsweise der taktilen Erfassungseinrichtung 55 veranschaulichen. Dementsprechend ist die in den Figuren 2 und 3 gezeigte Anordnung in den Figuren 4a bis 7 nur prinzipiell, d.h. in stark reduzierter Form, wiedergegeben. Beispielsweise sind von den tatsächlich vorhandenen drei Lagerstellen 25 der Abschirmungsbürste 14 nur zwei angedeutet.

Vor Beginn der Blechbearbeitung wird die Abschirmungseinheit 11 mit Hilfe des durch die numerische Maschinensteuerung 13 gesteuerten Positionierantriebes 23 in Richtung der vertikalen Bewegungsachse 12 in eine Position bewegt, bei welcher die Stirnfläche 19 der Abschirmungsbürste 14 von der Oberfläche 56 eines zu bearbeitenden Bleches 2 in vertikaler Richtung beabstandet ist. An der Tragplatte 21 der Trageinheit 20 ist an den Lagerstellen 25 für die Abschirmungsbürste 14 im Innern eines jeden Lagergehäuses 26 die Feder 39 zwischen der Gehäusedecke 28 und der Stufenfläche 40 des Lagerbolzens 32 geringfügig vorgespannt. Dadurch werden die Lagerbolzen 32 in Richtung auf das Blech 2 beaufschlagt und die Messfahnen 36 an den Lagerbolzen 32 werden von oben her an die Gehäusedecke 28 der Lagergehäuse 26 angelegt. Es ergeben sich damit an jeder Lagerstelle 25 die Verhältnisse gemäß Figur 3. Die als Anzeigeelemente fungierenden Lagerbolzen 32 nehmen in ihrer vertikalen Bewegungsrichtung eine Grundstellung ein. Die Grundstellung der Lagerbolzen 32 wird mittels des Wegmesssystems 54 erfasst. Zu diesem Zweck wird an jeder der Lagerstellen 25 der in vertikaler Richtung bestehende Abstand zwischen dem mit der Trageinheit 20 verbundenen Wegsensor 52 und der mit dem Lagerbolzen 32 verbundenen Messfahne 36 gemessen.

Ausgehend von diesem in Figur 4a prinzipiell veranschaulichten Betriebszustand wird die Abschirmungseinheit 11 mittels des numerisch gesteuerten Positionierantriebes 23 in Richtung der vertikalen Bewegungsachse 12 zu dem Blech 2 hin abgesenkt. Dabei führen die Trageinheit 20 und die Abschirmungsbürste 14 zunächst eine gemeinschaftliche Absenkbewegung aus. Die gemeinschaftliche Absenkbewegung endet, sobald die als Tasteinrichtung verwendete Abschirmungsbürste 14 mit ihrer Stirnfläche 19 auf der Oberfläche 56 des Bleches 2 aufsetzt. Ab dann führt die Absenkbewegung der Trageinheit 20 zu einer Relativbewegung der Tragplatte 21 der Trageinheit 20 gegenüber der Abschirmungsbürste 14, im Einzelnen gegenüber deren Grundplatte 15. Aufgrund dieser Relativbewegung fahren an den Lagerstellen 25 die mit der Grundplatte 15 der Abschirmungsbürste 14 verbundenen Lagerbolzen 32 nach oben aus den an der Tragplatte 21 der Trageinheit 20 befestigten Lagergehäusen 26 aus. Die Federn 39 im Innern der Lagergehäuse 26 werden gestaucht. Die Messfahnen 36 an den Lagerbolzen 32 heben von den Lagergehäusen 26 ab und entfernen sich in vertikaler Richtung von den zugeordneten Wegsensoren 52. Die Grundplatte 15 fungiert als abschirmungsseitiges Referenzelement für die Stirnfläche 19 der Abschirmungsbürste 14, da die von den Lagerstellen der Lagerbolzen 32 an der Grundplatte 15 definierte Ebene parallel zu der Stirnfläche 19 verläuft. Die Trageinheit 20 bildet ein Widerlager für die Abschirmungsbürste 14.

Hat die Trageinheit 20 ihre in der numerischen Maschinensteuerung 13 hinterlegte untere Endstellung erreicht, so wird der Positionierantrieb 23 stillgesetzt. Es stellt sich damit der in Figur 4b prinzipiell dargestellte Betriebszustand ein. Die als Anzeigeelemente fungierenden Lagerbolzen 32 befinden sich in ihrer Endstellung.

An sämtlichen Lagerstellen 25 wird der nun in vertikaler Richtung bestehende Abstand zwischen dem jeweiligen Wegsensor 52 und der zugeordneten Messfahne 36 gemessen. Das Messergebnis wird in einer Vergleichseinrichtung der numerischen Maschinensteuerung 13 mit dem Ergebnis der bei Grundstellung der Lagerbolzen 32 durchgeführten Abstandsmessung verglichen. Ergibt sich für sämtliche Lagerstellen 25 dieselbe Abstandsdifferenz, so indiziert dies, dass bei von der Oberfläche 56 des Bleches 2 in vertikaler Richtung beabstandeter Abschirmungsbürste 14 deren Stirnfläche 19 parallel zu der Oberfläche 56 des Bleches 2 verläuft. Für die nachfolgende Blechbearbeitung bedeutet dies, dass durch eine entsprechend bemessene Absenkbewegung der Abschirmungseinheit 11 mittels des Positionierantriebes 23 die Abschirmungsbürste 14 gegenüber dem zu bearbeitenden Blech 2 in eine werkstücknahe Gebrauchslage bewegt werden kann, in welcher die Stirnfläche 19 der Abschirmungsbürste 14 mit ihrer Sollausrichtung in einem Abstand im Zehntelmillimeterbereich parallel zu der Oberfläche 56 des Bleches 2 verläuft. Dann nimmt die Abschirmungsbürste 14 eine Lage ein, bei welcher sie den auf das Blech 2 gerichteten Laserstrahl sowie dessen Bearbeitungsstelle an dem Blech 2 optimal gegen die Umgebung abschirmt. Ein Austreten von Laserstrahlung infolge einer Schiefstellung der Abschirmungsbürste 14 ist ausgeschlossen.

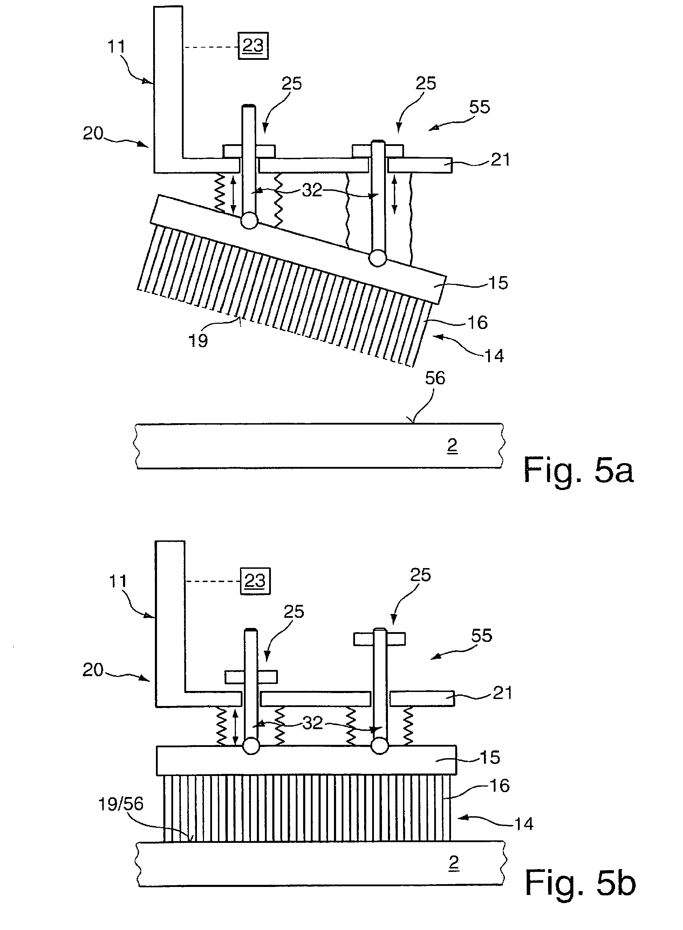

Verhältnisse, bei denen eine funktionssichere Abschirmung des Laserstrahls und dessen Bearbeitungsstelle nicht gewährleistet wäre, sind in den Figuren 5a bis 7 dargestellt.

Gemäß den Figuren 5a, 5b verläuft die Stirnfläche 19 der Abschirmungsbürste 14 bei von der Oberfläche 56 des Bleches 2 beabstandeter Abschirmungsbürste 14 wegen einer Fehljustage der Abschirmungsbürste 14 nicht parallel zu der Oberfläche 56 des Bleches 2. Wird bei derartigen Verhältnissen die Abschirmungseinheit 11 auf das Blech 2 aufgesetzt, so ändern sich an den Lagerstellen 25 für die Abschirmungsbürste 14 an der Tragplatte 21 der Trageinheit 20 die Abstände zwischen den mit den Lagerbolzen 32 verbundenen Messfahnen 36 und den zugeordneten Wegsensoren 52 in unterschiedlichem Maße (Figur 5b),

Die Fehljustage der Abschirmungsbürste 14 kann manuell korrigiert werden. Zu diesem Zwecke ist an der oder den betreffenden Lagerstellen 25 zunächst die Sicherungsmutter 37 zu lösen. Anschließend wird der betreffende Lagerbolzen 32 mittels eines an dem Eingriff 38 angesetzten Drehbetätigungswerkzeuges gedreht und dadurch in axialer Richtung gegenüber der an ihm angebrachten Messfahne 36 verlagert. Auf diese Art und Weise kann die axiale Länge eingestellt werden, mit welcher der in der Grundstellung befindliche Lagerbolzen 32 bei von der Oberfläche 56 des Bleches 2 beabstandeter Abschirmungsbürste 14 über die Unterseite der Tragplatte 21 der Trageinheit 20 vorsteht. Damit einher geht eine Einstellung des Gelenklagers 50 des oder der betreffenden Lagerbolzen 32 in vertikaler Richtung und damit eine Ausrichtung der Stirnfläche 19 der an dem Lagerbolzen 32 angebrachten Abschirmungsbürste 14 parallel zu der Oberfläche 56 des Bleches 2. Die Lagerbolzen 32 sind dementsprechend Teil einer Stelleinrichtung 57 zur Justierung der Stirnfläche 19 der Abschirmungsbürste 14. Nach der ordnungsgemäßen Justage der Abschirmungsbürste 14 wird an der oder den Lagerstellen 25 die jeweilige Sicherungsmutter 37 wieder auf den Lagerbolzen 32 aufgeschraubt und dadurch die vorgenommene Einstellung gesichert. Damit ist die Erfassungseinrichtung 55 kalibriert und eine wirksame Abschirmung des Laserstrahls bei der nachfolgenden Blechbearbeitung gewährleistet.

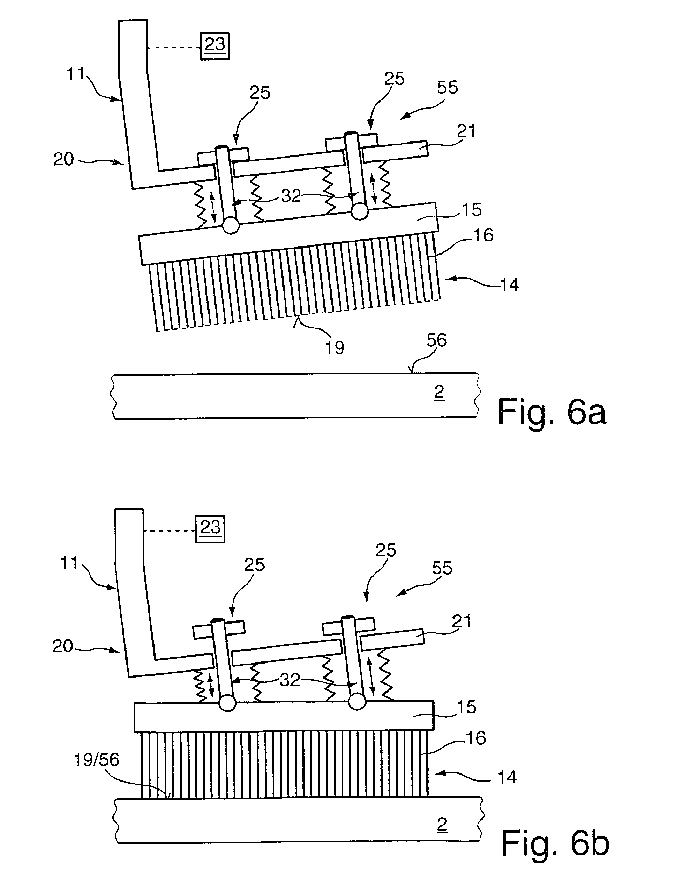

Die Figuren 6a und 6b zeigen einen Fall, in welchem eine Fehlausrichtung der Stirnfläche 19 der Abschirmungsbürste 14 auf eine Deformation der Trageinheit 20 zurückzuführen ist. Infolge einer Kollision der Trageinheit 20 ist deren Tragplatte 21 nach oben gebogen. Wird die Abschirmungsbürste 14 aus einer angehobenen Stellung (Figur 6a) auf die Oberfläche 56 des Bleches 2 aufgesetzt, so werden an den Lagerstellen 25 für die Abschirmungsbürste 14 an der Tragplatte 21 der Trageinheit 20 wiederum unterschiedliche Änderungen des Abstandes zwischen der jeweiligen Messfahne 36 und dem zugeordneten Wegsensor 52 festgestellt. Ob in Fällen dieser Art die Stirnfläche 19 der Abschirmungsbürste 14 beim Absenken der Trageinheit 20 vollflächig auf der Oberfläche 56 des Bleches 2 aufsetzen kann und ob eine Korrektur der Fehljustage der Abschirmungsbürste 14 in der vorstehend beschriebenen Weise mittels der Stelleinrichtung 57 möglich ist, hängt von dem Ausmaß der Deformierung der Trageinheit 20 ab. Geringfügige Schrägstellungen der Tragplatte 21 können durch eine entsprechende Einstellung der Lagerbolzen 32 in vertikaler Richtung kompensiert werden. Die Gelenklager 50 zwischen den Lagerbolzen 32 und der Basisplatte 15 der Abschirmungsbürste 14 lassen in derartigen Fällen eine hinreichende Bewegung der Abschirmungsbürste 14 gegenüber den Lagerbolzen 32 zu und verhindern dadurch ein Verklemmen der Lagerbolzen 32 an der Trageinheit 20 bei der von der Trageinheit 20 relativ zu der Abschirmungsbürste 14 ausgeführten Absenkbewegung.

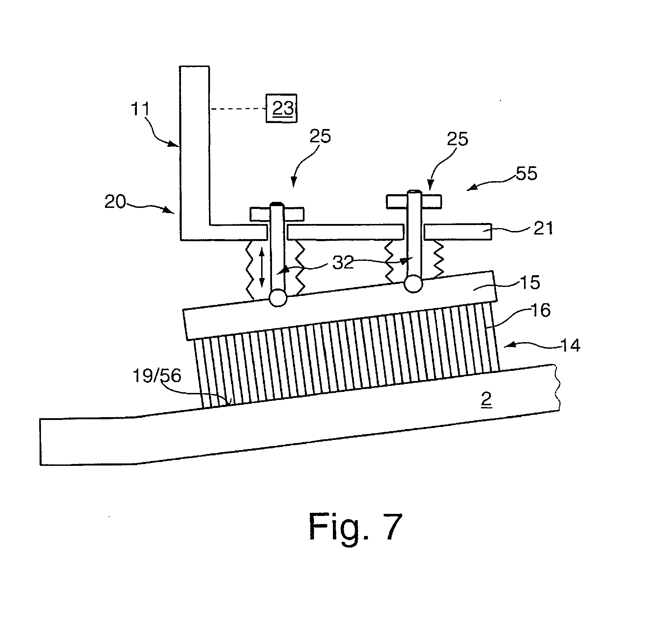

Eine Erfassung der Ausrichtung der Stirnfläche 19 der Abschirmungsbürste 14 gegenüber der Oberfläche 56 des Bleches 2 wird nicht nur vor sondern auch während der Laserbearbeitung durchgeführt. Gemäß Figur 7 wird bei der Laserbearbeitung ein mit einer irregulären Abwinkelung versehenes Blech 2 relativ zu der Abschirmungsbürste 14 bewegt. Infolgedessen wird die Abschirmungsbürste 14 ungleichmäßig nach oben ausgelenkt. Dadurch ändert sich an den Lagerstellen 25 für die Abschirmungsbürste 14 an der Tragplatte 21 der Trageinheit 20 der Abstand zwischen der an dem betreffenden Lagerbolzen 32 angebrachten Messfahne 36 und dem zugeordneten Wegsensor 52 uneinheitlich. Die uneinheitliche Abstandsänderung wird mittels des Wegmesssystems 54 erfasst und führt bei Überschreiten eines voreingestellten Toleranzwertes zu einer mittels der numerischen Maschinensteuerung 13 bewirkten Notabschaltung der Strahlquelle für den Laserstrahl.

Fortgesetzt wird die Werkstückbearbeitung in Fällen, in denen die Lagerbolzen 32 unter der Wirkung der Relativbewegung der Abschirmungsbürste 14 und eines Bleches 2 an sämtlichen Lagerstellen 25 einheitlich ihre Position gegenüber der Trageinheit 20 ändern. Bei einer derartigen einheitlichen Vertikalbewegung der Lagerbolzen 32 bleibt die parallele Ausrichtung der Stirnfläche 19 der Abschirmungsbürste 14 gegenüber der Oberfläche 56 des Bleches 2 erhalten.

Ebenfalls nicht reagiert wird auf eine geringfügig uneinheitliche vertikale Verlagerung der Lagerbolzen 32 an den Lagerstellen 25. Derartige Vertikalbewegungen der Lagerbolzen 32 können dann auftreten, wenn das zu bearbeitende Blech 2 kleine Unebenheiten aufweist. Aufgrund der gelenkigen Lagerung der Grundplatte 15 der Abschirmungsbürste 14 an den Lagerbolzen 32 führt die Abschirmungsbürste 14 infolge derartiger Unebenheiten des zu bearbeitenden Bleches 2 Ausgleichsbewegungen gegenüber den Lagerbolzen 32 aus. Die Lagerbolzen 32 können dementsprechend ihre Ausrichtung gegenüber der Trageinheit 20 beibehalten. Ein Verklemmen der Lagerbolzen 32 an der Trageinheit 20 wird vermieden.

Die taktile Erfassungseinrichtung 55 wird auch zur Blechdickenmessung eingesetzt. Zu diesem Zweck wird ein Referenzblech verwendet, dessen Dicke bekannt ist. Mittels des Positionierantriebes 23 wird die Trageinheit 20 in Richtung der vertikalen Bewegungsachse 12 aus einer Anfangsstellung in eine in der numerischen Maschinensteuerung 13 hinterlegte Referenzposition abgesenkt. Dadurch gelangt die an der Trageinheit 20 aufgehängte Abschirmungseinheit 11 in Richtung der vertikalen Bewegungsachse 12 aus einer Anfangsposition, bei welcher die Stirnfläche 19 der Abschirmungsbürste 14 von der Oberfläche des Referenzbleches beabstandet ist, in eine Position, bei welcher sich die Abschirmungsbürste 14 der Abschirmungseinheit 11 über die Stirnfläche 19 an der Blechoberfläche abstützt. Verändert sich dabei an sämtlichen Lagerstellen 25 der Abstand zwischen der mit dem jeweiligen Lagerbolzen 32 verbundenen Messfahne 36 und dem zugeordneten Wegsensor 52 in gleichem Maße, so wird die Abstandsänderung als Referenzgröße in der Maschinensteuerung 13 hinterlegt. Bei uneinheitlicher Abstandsänderung wird die Erfassungseinrichtung 55 in der vorstehend beschriebenen Art und Weise kalibriert, ehe die Referenzgröße der Abstandsänderung durch ein erneutes Absenken der Trageinheit 20 mit der Abschirmungsbürste 14 bestimmt wird.

Zur Messung der Dicke von Blechen, die nach dem Referenzblech in die Laserbearbeitungsmaschine 1 eingelegt werden, wird die Trageinheit 20 erneut in ihre Referenzposition in Richtung der vertikalen Bewegungsachse 12 abgesenkt. Die damit verbundene Änderung des Abstandes zwischen den Messfahnen 36 und den zugeordneten Wegsensoren 52 an den Lagerstellen 25 der Abschirmungsbürste 14 wird als Ist-Wert gemessen und mit dem zuvor ermittelten Referenzwert verglichen. Aus der Differenz zwischen dem Referenzwert und dem gemessenen Ist-Wert kann auf die Dicke des nach dem Referenzblech in die Laserbearbeitungsmaschine 1 eingelegten Bleches geschlossen werden. In Abhängigkeit von der ermittelten Blechdicke wird in der Maschinensteuerung 13 diejenige Position festgelegt, in welche bei der nachfolgenden Blechbearbeitung die Trageinheit 20 mit der daran gelagerten Abschirmungsbürste 14 in Richtung der vertikalen Bewegungsachse 12 zugestellt wird und bei welcher die Abschirmungsbürste 14 ihre Gebrauchslage einnimmt und die Stirnfläche 19 der Abschirmungsbürste 14 mit der Sollausrichtung gegenüber der zugeordneten Blechoberfläche angeordnet ist.

## Patentansprüche

1. Abschirmungsvorrichtung zur Abschirmung eines an einer Laserbearbeitungsmaschine (1) zum Bearbeiten von Werkstücken, insbesondere von Blechen (2), auf ein Werkstück gerichteten Laserstrahls und/oder einer Auftreffstelle des Laserstrahls an dem Werkstück, mit einer Abschirmungseinheit (11), die ein Abschirmungsorgan (14) umfasst,
• wobei das Abschirmungsorgan (14) zur Abschirmung des Laserstrahls oder der Auftreffstelle des Laserstrahls an dem Werkstück in eine Gebrauchslage an dem Werkstück bewegbar ist und
• wobei an einem freien Ende des Abschirmungsorgans (14) eine Stirnfläche (19) ausgebildet ist, die bei Gebrauchslage des Abschirmungsorgans (14) einer zugeordneten Werkstückfläche zugewandt und bei einer Sollausrichtung gegenüber der Werkstückfläche im Wesentlichen parallel zu der Werkstückfläche ausgerichtet ist,
**dadurch gekennzeichnet, dass**
eine Erfassungseinrichtung (5) vorgesehen ist, welche eine Abweichung der Ausrichtung der Stirnfläche (19) des in der Gebrauchslage befindlichen Abschirmungsorgans (14) von der Sollausrichtung gegenüber der Werkstückfläche erfasst.

2. Abschirmungsvorrichtung nach Anspruch 1, **dadurch gekennzeichnet, dass** für das Abschirmungsorgan (14) ein Widerlager (20) vorgesehen ist, an welchem das Abschirmungsorgan (14) in Querrichtung seiner Stirnfläche (19) über ein abschirmungsseitiges Referenzelement (15) abgestützt ist, das seinerseits eine definierte Ausrichtung gegenüber der Stirnfläche (19) des Abschirmungsorgans (14) aufweist und dass die Abweichung der Ausrichtung der Stirnfläche (19) des in der Gebrauchslage befindlichen Abschirmungsorgans (14) von der Sollausrichtung gegenüber der Werkstückfläche erfassbar ist, indem die Erfassungseinrichtung (55) die gegenseitige Ausrichtung des Widerlagers (20) für das Abschirmungsorgan (14) und des abschirmungsseitigen Referenzelementes (15) erfasst.

3. Abschirmungsvorrichtung nach Anspruch 2, **dadurch gekennzeichnet, dass** als Erfassungseinrichtung (55) zur Erfassung der gegenseitigen Ausrichtung des Widerlagers (20) für das Abschirmungsorgan (14) und des abschirmungsseitigen Referenzelementes (15) eine kalibrierbare Erfassungseinrichtung (55) vorgesehen ist.

4. Abschirmungsvorrichtung nach einem der vorhergehenden Ansprüche, **dadurch gekennzeichnet, dass** eine Stelleinrichtung (57) vorgesehen ist, mittels derer bei Abweichung der erfassten Ausrichtung der Stirnfläche (19) des in der Gebrauchslage befindlichen Abschirmungsorgans (14) von der Sollausrichtung die Stirnfläche (19) des Abschirmungsorgans (14) in ihrer Querrichtung zustellbar und dadurch mit der Sollausrichtung anordenbar ist.

5. Abschirmungsvorrichtung nach Anspruch 4, **dadurch gekennzeichnet, dass** als Stelleinrichtung (57) zum Anordnen der Stirnfläche (19) des Abschirmungsorgans (14) mit der Sollausrichtung eine Stelleinrichtung (57) vorgesehen ist, mittels derer das Widerlager (20) für das Abschirmungsorgan (14) und das abschirmungsseitige Referenzelement (15) in Querrichtung der Stirnfläche (19) des Abschirmungsorgans (14) relativ zueinander zustellbar sind.

6. Abschirmungsvorrichtung nach einem der vorhergehenden Ansprüche, **dadurch gekennzeichnet, dass** als Erfassungseinrichtung (55) zur Erfassung der Abweichung der Ausrichtung der Stirnfläche (19) des in der Gebrauchslage befindlichen Abschirmungsorgans (14) von der Sollausrichtung gegenüber der Werkstückfläche eine taktile Erfassungseinrichtung (55) vorgesehen ist, mit einer Tasteinrichtung sowie mit einer Auswerteeinrichtung, wobei mittels der Tasteinrichtung der Verlauf der Werkstückfläche aufnehmbar ist, indem die Tasteinrichtung in Querrichtung der Werkstückfläche oder einer die Werkstückfläche repräsentierenden Fläche bewegbar und in einer Taststellung an der Werkstückfläche oder an der die Werkstückfläche repräsentierenden Fläche anlegbar ist und wobei mittels der Auswerteeinrichtung der mittels der Tasteinrichtung aufgenommene Verlauf der Werkstückfläche mit dem Verlauf der Stirnfläche (19) des in der Gebrauchslage befindlichen Abschirmungsorgans (14) vergleichbar ist.

7. Abschirmungsvorrichtung nach Anspruch 6, **dadurch gekennzeichnet, dass** als Tasteinrichtung der taktilen Erfassungseinrichtung (55) das Abschirmungsorgan (14) vorgesehen ist.

8. Abschirmungsvorrichtung nach Anspruch 6 oder Anspruch 7,
**dadurch gekennzeichnet, dass** die Auswerteeinrichtung der taktilen Erfassungseinrichtung (55) ein Bezugselement (20), eine Anzeigeeinrichtung, eine Wegmesseinrichtung (53) sowie eine Vergleichseinrichtung (13) aufweist,
• wobei die Anzeigeeinrichtung wenigstens zwei Anzeigeelemente (32) umfasst, die mit der Tasteinrichtung verbunden sind, die über die Tasteinrichtung zwei voneinander beabstandeten Punkten an der Werkstückfläche oder an der die Werkstückfläche repräsentierenden Fläche zugeordnet sind und die gegenüber dem Bezugselement (20) in eine Grundstellung sowie in eine Endstellung bewegbar sind, wobei bei Grundstellung der Anzeigeelemente (32) die Tasteinrichtung von der Werkstückfläche oder von der die Werkstückfläche repräsentierenden Fläche beabstandet ist und die Anzeigeelemente (32) den Verlauf der Stirnfläche (19) des in der Gebrauchslage befindlichen Abschirmungsorgans (14) anzeigen und wobei bei Endstellung der Anzeigeelemente (32) die Tasteinrichtung die Taststellung einnimmt und die Anzeigeelemente (32) den Verlauf der Werkstückfläche anzeigen,
• wobei mittels der Wegmesseinrichtung (53) die Beträge der Bewegungen der Anzeigeelemente (32) zwischen der jeweiligen Grundstellung und der jeweiligen Endstellung bestimmbar sind und
• wobei mittels der Vergleichseinrichtung (13) die mittels der Wegmesseinrichtung (53) bestimmten Beträge der Bewegungen der Anzeigeelemente (32) miteinander vergleichbar sind.

9. Laserbearbeitungsmaschine zum Bearbeiten von Werkstücken, insbesondere von Blechen (2), mit einer nach einem der vorstehenden Ansprüche ausgebildeten Abschirmungsvorrichtung (10) zur Abschirmung eines an der Laserbearbeitungsmaschine (1) auf ein Werkstück gerichteten Laserstrahls.

10. Laserbearbeitungsmaschine nach Anspruch 9, **dadurch gekennzeichnet, dass** die Laserbearbeitungsmaschine (1) eine Maschinensteuerung (13) aufweist und dass die Erfassungseinrichtung (55) zur Erfassung einer Abweichung der Ausrichtung der Stirnfläche (19) des in der Gebrauchslage befindlichen Abschirmungsorgans (14) von der Sollausrichtung gegenüber der Werkstückfläche einen Teil der Maschinensteuerung (13) bildet.

11. Laserbearbeitungsmaschine nach Anspruch 9 oder 10, **dadurch gekennzeichnet, dass** die Laserbearbeitungsmaschine (1) eine Einrichtung zur Messung der Dicke von zu bearbeitenden und/oder von bearbeiteten Werkstücken (Einrichtung zur Werkstückdickenmessung) aufweist und dass die als taktile Erfassungseinrichtung (55) ausgebildete Erfassungseinrichtung (55) zur Erfassung einer Abweichung der Ausrichtung der Stirnfläche (19) des in der Gebrauchslage befindlichen Abschirmungsorgans (14) von der Sollausrichtung gegenüber der Werkstückfläche einen Teil der Einrichtung zur Werkstückdickenmessung bildet.

12. Verfahren zum Abschirmen eines an einer Laserbearbeitungsmaschine (1) zum Bearbeiten von Werkstücken, insbesondere von Blechen (2), auf ein Werkstück gerichteten Laserstrahls und/oder einer Auftreffstelle des Laserstrahls an dem Werkstück,
• wobei ein Abschirmungsorgan (14) einer Abschirmungseinheit (11) einer Abschirmungsvorrichtung (10) zur Abschirmung des Laserstrahls oder der Auftreffstelle des Laserstrahls an dem Werkstück in eine Gebrauchslage an dem Werkstück bewegt wird und
• wobei das in die Gebrauchslage bewegte Abschirmungsorgan (14) mit einer an einem freien Ende des Abschirmungsorgans (14) ausgebildeten Stirnfläche (19) einer zugeordneten Werkstückfläche gegenüberliegend angeordnet und bei einer Sollausrichtung parallel zu der Werkstückfläche ausgerichtet wird,
**dadurch gekennzeichnet, dass**
eine Abweichung der Ausrichtung der Stirnfläche (19) des in der Gebrauchslage befindlichen Abschirmungsorgans (11) von der Sollausrichtung gegenüber der Werkstückfläche erfasst wird.

13. Verfahren nach Anspruch 12, **dadurch gekennzeichnet, dass** die Abweichung der Ausrichtung der Stirnfläche (19) des in der Gebrauchslage befindlichen Abschirmungsorgans (14) von der Sollausrichtung gegenüber der Werkstückfläche erfasst wird,
• indem zur Aufnahme des Verlaufs der Werkstückfläche eine Tasteinrichtung in Querrichtung der Werkstückfläche oder einer die Werkstückfläche repräsentierenden Fläche bewegt und in einer Taststellung an der Werkstückfläche oder an der die Werkstückfläche repräsentierenden Fläche angelegt wird und
• indem der mittels der Tasteinrichtung aufgenommene Verlauf der Werkstückfläche mit dem Verlauf der Stirnfläche (19) des in der Gebrauchslage befindlichen Abschirmungsorgans (14) verglichen wird.

14. Verfahren zum Bearbeiten von Werkstücken, insbesondere von Blechen (2), mittels einer Laserbearbeitungsmaschine (1), wobei an der Laserbearbeitungsmaschine (1) ein Laserstrahl auf ein Werkstück gerichtet wird und wobei der auf das Werkstück gerichtete Laserstrahl und/oder dessen Auftreffstelle an dem Werkstück nach einem Verfahren gemäß Anspruch 12 oder Anspruch 13 abgeschirmt wird.

15. Verfahren nach Anspruch 14, **dadurch gekennzeichnet, dass** die Dicke von zu bearbeitenden und/oder von bearbeiteten Werkstücken (Werkstückdicke) bestimmt wird,
• indem die Tasteinrichtung der als taktile Erfassungseinrichtung (55) ausgebildeten Erfassungseinrichtung (15) zur Erfassung einer Abweichung der Ausrichtung der Stirnfläche (19) des in der Gebrauchslage befindlichen Abschirmungsorgans (14) von der Sollausrichtung in Querrichtung der Werkstückfläche bewegt und in einer Taststellung an der Werkstückfläche angelegt wird,
• indem die Taststellung der Tasteinrichtung in einem Bezugssystem der Laserbearbeitungsmaschine (1) mit einer Bezugsstellung verglichen wird und
• indem anhand des durchgeführten Vergleichs die Werkstückdicke bestimmt wird.

## Claims

1. Shielding device for shielding a laser beam which is directed onto a workpiece on a laser processing machine (1) for processing workpieces, in particular metal sheets (2), and/or an impact location of the laser beam on the workpiece, having a shielding unit (11) which comprises a shielding member (14),
• wherein the shielding member (14) for shielding the laser beam or the impact location of the laser beam on the workpiece can be moved into a position for use on the workpiece and
• wherein there is formed at a free end of the shielding member (14) an end face (19) which, when the shielding member (14) is in the position for use, faces an associated workpiece face and, in the event of a desired orientation with respect to the workpiece face, is orientated substantially parallel with the workpiece face,
**characterised in that**
there is provided a detection device (5) which detects a deviation of the orientation of the end face (19) of the shielding member (14) which is located in the position for use from the desired orientation with respect to the workpiece face.

2. Shielding device according to claim 1, **characterised in that**, for the shielding member (14), there is provided an abutment (20) on which the shielding member (14) is supported in the transverse direction of the end face (19) thereof via a shielding-side reference element (15) which itself has a defined orientation with respect to the end face (19) of the shielding member (14) and **in that** the deviation of the orientation of the end face (19) of the shielding member (14) located in the position for use from the desired orientation with respect to the workpiece face can be detected by the detection device (55) detecting the mutual orientation of the abutment (20) for the shielding member (14) and the shielding-side reference element (15).

3. Shielding device according to claim 2, **characterised in that** a detection device (55) which can be calibrated is provided as a detection device (55) for detecting the mutual orientation of the abutment (20) for the shielding member (14) and the shielding-side reference element (15).

4. Shielding device according to any one of the preceding claims, **characterised in that** there is provided an adjustment device (57) by means of which, in the event of deviation of the detected orientation of the end face (19) of the shielding member (14) which is located in the position for use from the desired orientation, the end face (19) of the shielding member (14) can be adjusted in the transverse direction thereof and can thereby be arranged with the desired orientation.

5. Shielding device according to claim 4, **characterised in that** there is provided as an adjustment device (57) for arranging the end face (19) of the shielding member (14) with the desired orientation an adjustment device (57) by means of which the abutment (20) for the shielding member (14) and the shielding-side reference element (15) can be adjusted relative to each other in the transverse direction of the end face (19) of the shielding member (14).

6. Shielding device according to any one of the preceding claims, **characterised in that** there is provided as a detection device (55) for detecting the deviation of the orientation of the end face (19) of the shielding member (14) located in the position for use from the desired orientation with respect to the workpiece face a tactile detection device (55) having a sensor device and having an evaluation device, the orientation of the workpiece face being able to be detected by means of the sensor device by the sensor device being able to be moved in the transverse direction of the workpiece face or a face which represents the workpiece face and being able to be placed in a sensor position on the workpiece face or on the face which represents the workpiece face, and the orientation of the workpiece face detected by means of the sensor device being able to be compared with the orientation of the end face (19) of the shielding member (14) located in the position for use by means of the evaluation device.

7. Shielding device according to claim 6, **characterised in that** the shielding member (14) is provided as a sensor device of the tactile detection device (55).

8. Shielding device according to claim 6 or claim 7, **characterised in that** the evaluation device of the tactile detection device (55) has a reference element (20), a display device, a path measurement device (53) and a comparison device (13),
• wherein the display device comprises at least two display elements (32) which are connected to the sensor device and which are associated via the sensor device with two spaced-apart locations on the workpiece face or on the face which represents the workpiece face, and which can be moved with respect to the reference element (20) into a basic position and into an end position, the sensor device being spaced apart from the workpiece face or from the face which represents the workpiece face when the display elements (32) are in the basic position, and the display elements (32) indicating the orientation of the end face (19) of the shielding member (14) which is located in the position for use, and the sensor device assuming the sensor position and the display elements (32) indicating the orientation of the workpiece face when the display elements (32) are in the end position,
• the values of the movements of the display elements (32) between the respective basic position and the respective end position being able to be determined by means of the path measurement device (53), and
• the values of the movements of the display elements (32), which values are determined by means of the path measurement device (53), being able to be compared with each other by means of the comparison device (13).

9. Laser processing machine for processing workpieces, in particular metal sheets (2), having a shielding device (10) which is constructed in accordance with any one of the preceding claims for shielding a laser beam which is directed onto a workpiece on the laser processing machine (1).

10. Laser processing machine according to claim 9, **characterised in that** the laser processing machine (1) has a machine control system (13) and **in that** the detection device (55) for detecting a deviation of the orientation of the end face (19) of the shielding member (14) which is located in the position for use from the desired orientation with respect to the workpiece face forms a portion of the machine control system (13).

11. Laser processing machine according to claim 9 or 10, **characterised in that** the laser processing machine (1) has a device for measuring the thickness of workpieces which are to be processed and/or which have been processed (device for workpiece thickness measurement) and **in that** the detection device (55) which is constructed as a tactile detection device (55) for detecting a deviation of the orientation of the end face (19) of the shielding member (14) which is located in the position for use from the desired orientation with respect to the workpiece face forms a portion of the device for workpiece thickness measurement.

12. Method for shielding a laser beam which is directed onto a workpiece on a laser processing machine (1) for processing workpieces, in particular metal sheets (2), and/or an impact location of the laser beam on the workpiece,
• wherein a shielding member (14) of a shielding unit (11) of a shielding device (10) for shielding the laser beam or the impact location of the laser beam on the workpiece is moved into a position for use on the workpiece and
• wherein an end face (19) of the shielding member (14) moved into the position for use is arranged opposite an associated workpiece face and orientated parallel with the workpiece face in the event of a desired orientation, which end face (19) is formed on a free end of the shielding member (14),
**characterised in that**
a deviation of the orientation of the end face (19) of the shielding member (14) which is located in the position for use from the desired orientation with respect to the workpiece face is detected.

13. Method according to claim 12, **characterised in that** the deviation of the orientation of the end face (19) of the shielding member (14) located in the position for use from the desired orientation with respect to the workpiece face is detected
• by, in order to detect the orientation of the workpiece face, a sensor device moving in the transverse direction of the workpiece face or a face which represents the workpiece face and being placed in a sensor position on the workpiece face or on the face which represents the workpiece face, and
• by the orientation of the workpiece face detected by means of the sensor device being compared with the orientation of the end face (19) of the shielding member (14) located in the position for use.

14. Method for processing workpieces, in particular metal sheets (2), using a laser processing machine (1), wherein in the laser processing machine (1) a laser beam is directed onto a workpiece and wherein the laser beam which is directed onto the workpiece and/or the impact location thereof on the workpiece is shielded in accordance with a method according to claim 12 or claim 13.

15. Method according to claim 14, **characterised in that** the thickness of workpieces which are to be processed or which have been processed (workpiece thickness) is determined,
• by the sensor device of the detection device (15) which is constructed as a tactile detection device (55) for detecting a deviation of the orientation of the end face (19) of the shielding member (14) located in the position for use from the desired orientation being moved in the transverse direction of the workpiece face and being placed in a sensor position on the workpiece face,
• by the sensor position of the sensor device being compared with a reference position in a reference system of the laser processing machine (1), and
• by the workpiece thickness being determined by means of the comparison which has been carried out.

## Revendications

1. Dispositif de protection pour masquer un rayon laser dirigé sur une pièce et/ou un point d'incidence du rayon laser sur la pièce sur une machine d'usinage au laser (1) destinée à usiner des pièces, en particulier des tôles (2), avec une unité de protection (11) qui comprend un organe de protection (14),
• l'organe de protection (14) pour masquer le rayon laser ou le point d'incidence du rayon laser sur la pièce étant déplaçable dans une position d'utilisation sur la pièce et
• une face frontale (19) étant formée à une extrémité libre de l'organe de protection (14), qui, dans la position d'utilisation de l'organe de protection (14), est tournée vers une surface associée de la pièce et, dans une orientation de consigne par rapport à la surface de la pièce, orientée sensiblement parallèlement à la surface de la pièce,
**caractérisé en ce**
**qu'**un dispositif de détection (5) est prévu, lequel détecte une déviation de l'orientation de la face frontale (19) de l'organe de protection (14) se trouvant dans la position d'utilisation de l'orientation de consigne par rapport à la surface de la pièce.

2. Dispositif de protection selon la revendication 1, **caractérisé en ce qu'**une butée (20) est prévue pour l'organe de protection (14), contre laquelle l'organe de protection (14) est appuyé dans la direction transversale de sa face frontale (19) par l'intermédiaire d'un élément de référence côté protection (15), qui lui-même présente une orientation définie par rapport à la face frontale (19) de l'organe de protection (14), et que la déviation de l'orientation de la face frontale (19) de l'organe de protection (14) se trouvant dans la position d'utilisation de l'orientation de consigne par rapport à la surface de la pièce peut être détectée par le fait que le dispositif de détection (55) détecte l'orientation mutuelle de la butée (20) pour l'organe de protection (14) et de l'élément de référence côté protection (15).

3. Dispositif de protection selon la revendication 2, **caractérisé en ce qu'**il est prévu un dispositif de détection calibrable (55) comme dispositif de détection (55) pour détecter l'orientation mutuelle de la butée (20) pour l'organe de protection (14) et de l'élément de référence côté protection (15).

4. Dispositif de protection selon l'une des revendications précédentes, **caractérisé en ce qu'**un dispositif de réglage (57) est prévu, au moyen duquel, en cas de déviation de l'orientation détectée de la face frontale (19) de l'organe de protection (14) se trouvant dans la position d'utilisation de l'orientation de consigne, la face frontale (19) de l'organe de protection (14) est réglable dans sa direction transversale et ainsi alignable avec l'orientation de consigne.

5. Dispositif de protection selon la revendication 4, **caractérisé en ce qu'**il est prévu comme dispositif de réglage (57) pour aligner la face frontale (19) de l'organe de protection (14) avec l'orientation de consigne un dispositif de réglage (57) au moyen duquel la butée (20) pour l'organe de protection (14) et l'élément de référence côté protection (15) sont réglables l'un par rapport à l'autre dans la direction transversale de la face frontale (19) de l'organe de protection (14).

6. Dispositif de protection selon l'une des revendications précédentes, **caractérisé en ce qu'**il est prévu comme dispositif de détection (55) pour détecter la déviation de l'orientation de la face frontale (19) de l'organe de protection (14) se trouvant dans la position d'utilisation de l'orientation de consigne par rapport à la surface de la pièce un dispositif de détection tactile (55) avec un dispositif palpeur ainsi qu'avec un dispositif d'évaluation, le dispositif palpeur permettant de détecter l'orientation de la surface de la pièce, par le fait que le dispositif palpeur peut être déplacé dans la direction transversale de la surface de la pièce ou d'une surface représentant la surface de la pièce et appliqué dans une position de palpage sur la surface de la pièce ou sur la surface représentant la surface de la pièce, l'orientation de la surface de la pièce détectée au moyen du dispositif palpeur pouvant être comparé au moyen du dispositif d'évaluation avec l'orientation de la face frontale (19) de l'organe de protection (14) se trouvant dans la position d'utilisation.

7. Dispositif de protection selon la revendication 6, **caractérisé en ce que** l'organe de protection (14) est prévu comme dispositif palpeur du dispositif de détection tactile (55).

8. Dispositif de protection selon la revendication 6 ou la revendication 7, **caractérisé en ce que** le dispositif d'évaluation du dispositif de détection tactile (55) présente un élément de référence (20), un dispositif d'affichage, un dispositif de mesure de déplacement (53) ainsi qu'un dispositif de comparaison (13),
• le dispositif d'affichage comprenant au moins deux éléments d'affichage (32) qui sont reliés au dispositif palpeur, qui sont associés par l'intermédiaire du dispositif palpeur à deux points espacés l'un de l'autre sur la surface de la pièce ou sur la surface représentant la surface de la pièce et qui peuvent être déplacés par rapport à l'élément de référence (20) dans une position de base ainsi que dans une position extrême, sachant que dans la position de base des éléments d'affichage (32), le dispositif palpeur est espacé de la surface de la pièce ou de la surface représentant la surface de la pièce et les éléments d'affichage (32) affichent l'orientation de la face frontale (19) de l'organe de protection (14) se trouvant dans la position d'utilisation et que dans la position extrême des éléments d'affichage (32), le dispositif palpeur occupe la position de palpage et les éléments d'affichage (32) affichent l'orientation de la surface de la pièce,
• les valeurs des déplacements des éléments d'affichage (32) entre la position de base respective et la position extrême respective pouvant être déterminées au moyen du dispositif de mesure de déplacement (53) et
• les valeurs des déplacements des éléments d'affichage (32) déterminées au moyen du dispositif de mesure de déplacement (53) pouvant être comparés entre elles au moyen du dispositif de comparaison (13).

9. Machine d'usinage au laser destinée à usiner des pièces, en particulier des tôles (2), avec un dispositif de protection (10) réalisé selon l'une des revendications précédentes pour masquer un rayon laser dirigé sur une pièce sur la machine d'usinage au laser (1).

10. Machine d'usinage au laser selon la revendication 9, **caractérisée en ce que** la machine d'usinage au laser (1) présente une commande de machine (13) et que le dispositif de détection (55) pour détecter une déviation de l'orientation de la face frontale (19) de l'organe de protection (14) se trouvant dans la position d'utilisation de l'orientation de consigne par rapport à la surface de la pièce forme une partie de la commande de machine (13).

11. Machine d'usinage au laser selon la revendication 9 ou 10, **caractérisée en ce que** la machine d'usinage au laser (1) présente un dispositif pour mesurer l'épaisseur de pièces à usiner et/ou usinées (dispositif de mesure d'épaisseur de pièce) et que le dispositif de détection (55) réalisé sous la forme d'un dispositif de détection tactile (55) pour détecter une déviation de l'orientation de la face frontale (19) de l'organe de protection (14) se trouvant dans la position d'utilisation de l'orientation de consigne par rapport à la surface de la pièce forme une partie du dispositif de mesure d'épaisseur de pièce.

12. Procédé pour masquer un rayon laser dirigé sur une pièce et/ou un point d'incidence du rayon laser sur la pièce sur une machine d'usinage au laser (1) destinée à usiner des pièces, en particulier des tôles (2),
• selon lequel un organe de protection (14) d'une unité de protection (11) d'un dispositif de protection (10) pour masquer le rayon laser ou le point d'incidence du rayon laser sur la pièce est déplacé dans une position d'utilisation à la pièce et
• l'organe de protection (14) déplacé dans la position d'utilisation est disposé avec une face frontale (19) formée à une extrémité libre de l'organe de protection (14) en face d'une surface associée de la pièce et, dans une orientation de consigne, orientée parallèlement à la surface de la pièce,
**caractérisé en ce**
**qu'**une déviation de l'orientation de la face frontale (19) de l'organe de protection (14) se trouvant dans la position d'utilisation de l'orientation de consigne par rapport à la surface de la pièce est détectée.

13. Procédé selon la revendication 12, **caractérisé en ce que** la déviation de l'orientation de la face frontale (19) de l'organe de protection (14) se trouvant dans la position d'utilisation de l'orientation de consigne par rapport à la surface de la pièce est détectée par le fait
• qu'un dispositif palpeur est déplacé dans la direction transversale de la surface de la pièce ou d'une surface représentant la surface de la pièce pour détecter l'orientation de la surface de la pièce et appliqué dans une position de palpage sur la surface de la pièce ou sur la surface représentant la surface de la pièce et
• que l'orientation de la surface de la pièce détectée au moyen du dispositif palpeur est comparé avec l'orientation de la face frontale (19) de l'organe de protection (14) se trouvant dans la position d'utilisation.

14. Procédé d'usinage de pièces, en particulier de tôles (2), au moyen d'une machine d'usinage au laser (1), selon lequel un rayon laser est dirigé sur une pièce sur la machine d'usinage au laser (1) et le rayon laser dirigé sur la pièce et/ou son point d'incidence sur la pièce est masqué d'après un procédé selon la revendication 12 ou la revendication 13.

15. Procédé selon la revendication 14, **caractérisé en ce que** l'épaisseur de pièces à usiner et/ou usinées (épaisseur de pièce) est déterminée par le fait
• que le dispositif palpeur du dispositif de détection (15) réalisé sous la forme d'un dispositif de détection tactile (55) pour détecter une déviation de l'orientation de la face frontale (19) de l'organe de protection (14) se trouvant dans la position d'utilisation de la position de consigne est déplacé dans la direction transversale de la surface de la pièce et appliqué sur la surface de la pièce dans une position de palpage,
• que la position de palpage du dispositif palpeur est comparée avec une position de référence dans un système de référence de la machine d'usinage au laser (1) et
• que l'épaisseur de pièce est déterminée à l'aide de la comparaison effectuée.
